# EUROPEAN PATENT APPLICATION

(11) **EP 3 205 541 A1**
(43) Date of publication of application: **16.08.2017**
(21) Application number: 16155714.5
(22) Date of filing: 15.02.2016
(51) Int. Cl.: B61B 13/08, B61B 13/10

(54) **EVACUATED TUBE VEHICLE AND METHOD FOR TRANSPORTING CARGO**

(71) Applicant: Quantum Trains International B.V., 7335 DS Apeldoorn (NL)
(72) Inventor: Chevtchenko, Oleg Alexander, 2901 HG Capelle aan den IJssel (NL); Bakker, Ralph, 7335 DS Apeldoorn (NL); Oster, Daryl G., Longmont Colorado, CO Colorado 80504 (US); Lamb, Lieke, 2242 AA Wassenaar (NL); Shevchenko, Alexandr Alexandrovich, 04211 Kyiv (UA)
(74) Representative: 't Jong, Bastiaan Jacob

(57) **Abstract**

The invention relates to an evacuated tube vehicle for transporting cargo, comprising first and second elements of magnetic suspension means to support the vehicle by levitation in evacuated tube which vehicle further comprises:
- an open from at least two sides support frame for supporting cargo, such as at least one container;
- first and second sub-frames arranged on opposite ends of the open support frame;
- wherein first and second magnetic suspension means are attached to the support frame and/or the sub-frames; and-wherein a cargo space is defined by at least the support frame and the first and second sub-frames, such that the cargo space is open for insertion of cargo from at least one side of the vehicle.

## Description

The invention relates to an evacuated tube vehicle for transporting cargo, in particular for transporting energy.

A known method of transporting energy over long distance (from A to B) is with natural gas through compressor stations and the collecting network (at the supply site, point A), a pipeline (between A and B, over land or offshore) and distribution network and receiving terminal (at the demand site, point B). For example, a typical 1.52 m diameter, natural gas pipeline operated at 120-220 bar, costs 1.8 M€/km (prices of year 2016, to which the cost for the compressor station must be added), has a capacity of 28 Bm3, energy loss of 2.5% for 1000 km and typical length of few thousand km. Such pipe matches the flow of electric energy content of 45 GWe annual average, and three of such pipes in parallel are needed (providing a total of 28 Bm3 /year, or 22 Mton/year of natural gas at redundancy N-2). For such (N-2 redundant) connection the corresponding costs are: 5.4 M€/km.

This known method uses a proven technology. It is based on the assumption that there is enough of 02 supply and of CO2 sink capacities at the demand site (B), it allows use of co-generation (when both electricity and heat are used at the demand site); main drawbacks are: gas pipelines are not always possible (e.g., between USA and Europe), relatively high energy loss (e.g., 15% for 6000 km) and environmental concerns: e.g., when energy is realized at point B, CO2 is produced, 02 is consumed and waste heat is rejected; the additional costs (such as carbon tax) are not accounted above.

Notably, all pipes deliver natural gas from A to B, therefore when a question arises to return CO2 back to the supply site (A), additional set of pipes is required, which adds to the costs above. Note that between years 2012 and 2015 US price for natural gas went down (from 162 to 114 $ per 1000 m3 ), whilst EU price in the same period went up (from 331 to 436 $ per 1000 m3). Therefore, assuming 20 $ per 1000 m3 of gas price at the wellhead and a market price in EU of 350 $ per 1000 m3, said connection generates annually 17 B€ of income, therefore the capital cost of 32.4 B€ can be returned in estimated 4 years (assuming that 50% of the income is used for the return).

Other than natural gas energy rich substances like oil, petrol, different chemical products such as ethane, synthetic LNG, and so on, are also often transported by pipes. For example, TransCanada is building the Keystone XL Pipeline capable to deliver 830 000 barrels (131970 m3) of crude oil per day (or 1.53 m3 /s) with 41 electric pumping stations 25 MW each, placed at 80 km intervals. Energy losses for oil transportation per 1000 km are just 0.55% and the energy efficiency is 99.45%. According to "Oil Pipe Energy Consumption and Efficiency" report of Oak Ridge National Laboratory (ORNL) crude oil transport by pipeline in US in 1978 had efficiency of 99.6%, oil products transport - 99.5%, while electric energy transmission (also per 1000 km) - 92.0%.

A related known method is by setting at points A and B respectively a LNG plant (with sending terminal and collecting network) and a LNG receiving terminal (connected to a distribution network, power plants, etc.) and transporting LNG by ship from A to B. Such infrastructure provides more flexibility and it is cost-effective at distances over 2500 km, but it requires access to ships. For example, at a distance of 13000 km (e.g., Port of Dubai to Port of Rotterdam) the capital cost of LNG plant, receiving terminal and a fleet of ships (32 of 0.135 Mm3 ships are assumed moving at average speed of 37 km/h and providing a capacity of 1 ships/day, or 22 Mton/year, or 28 Bm3 per year, with the average 45 GWe of electricity content) are respectively 17, 4.5, and 4.5 B€, which adds up to 26 B€ (or 4.3 M€/km, assuming the same as above distance over land of 6000 km in order to compare).

Therefore, this second known method is cost competitive as compared to the first known method at long distances, even though its redundancy is provided differently (namely, by having sufficient network of harbors, LNG plants, receiving terminals, etc.). A typical breakdown of the total cost is: upstream development 21%; LNG and sending terminal: 34%; shipping 30.5%; regasification: 14.5%. The LNG market price (year 2014) in Europe was 400 €/ton, which equals to 266 € per 1000 m3 of natural gas at normal condition. The income generated from LNG sales amounts 8.8 B€/year and estimated return of the investment is 6 years (assuming 50% of the income is used for the return). Furthermore, 30% of the shipping cost (122 €/ton x 0.3 = 36 €/ton) is caused by the energy loss due to evaporation, since a two-way trip from A to B takes 30 days and evaporation is present all this time). LNG can be further distributed by truck or after regasification by a natural gas pipeline, which brings some additional costs.

Since at the demand site (point B) energy is released with consumption of 02, emission of CO2 etc., the related costs (e.g., carbon tax) must be added to the above.

Obviously, transportable energy containers (e.g., Dewars with proper dimensions) can be charged (loaded) with other than LNG energy rich substances, such as methane, ethane, liquid hydrogen (LH2) and so on and can be equally well transported by this related method.

Since the invention of an airplane many places on earth are connected with airlines. Dedicated for transporting passengers and cargo, airplanes fly at high speed (usually about 1000 km/h). The cost of transportation about $30-1000 per passenger and $10 per 1 kg of cargo seems reasonable for many. Airplanes can transport energy-rich substances (motor fuel), however, due to the high cost, only in extreme situations. Airbus A380 fuel consumption is 3 liters/100 km per one passenger (100 kg weight). About 80% of fully loaded A380 take-off weight is the aircraft and fuel. The airplanes are fast but not fuel-efficient. For this reason this method is not considered here.

Another known method is to transport only electricity (electrical energy) by using high voltage direct current technology. The method eliminates CO2 emission and 02 consumption at point B; also capture, storage of CO2 and 02 supply are easier to arrange (at A), but it does not allow for co-generation (since combustion takes place at point A and produced heat is often wasted due to no demand and no technical means to deliver efficiently the heat from A to B).

Furthermore, this known method is generally more expensive as compared to the previous methods (starts at 8 M€/km over land with 45 GWe HTS HVDC cable, redundancy N-2) and it may have security concerns for investors, since the method requires the most costly part of the electricity chain, the power plant (cost around 135 B€ for 45 GWe) to be placed at the supply point (A), which often is less stable and less under control than the demand point (B). Assuming the electrical energy market prices at points A and B respectively of 30 and 60 €/MWh, the 45 GWe connection will generate 12 B€/year of income. Furthermore, assuming 50% of that is return to investors, the capital cost of 48 B€ will be returned in 8 years. Note that other known methods of transporting electricity with high voltage direct or alternating current technology, e.g., with overhead lines are even less economic and therefore will not be considered here.

A known method of transporting energy with unconventional transport, namely with evacuated tube transport technologies (ET3) is by using kinetic energy of ET3 capsule (US 5950543, http://www.quantumtrain.com/et3/).The ET3 system facilitates delivery of both passengers and cargo in lightweight capsules (empty capsule weight is just 183 kg, fully loaded one weights 544 kg) traveling at high velocity on friction-less magnetic levitation (maglev) suspension in evacuated tubes with substantially reduces or even eliminates air drag. Fixed value of the total weight for all capsules moving in an ET3 system simplifies control over their velocities, as the capsules in a tube move with identical velocity. Due to the limited empty weight, the 1.3 m diameter ET3 capsules are designed with doors only at their ends and sliding inner modules move passengers and cargoes in and out of capsules. The passengers and cargoes wait for capsules at the terminals and pass through the airlocks in order to get into capsule that travels in evacuated tubes.

An ET3 vehicle has an ET3 capsule with a cylindrical hull which is 5 m long, 1.3 m in diameter (volume of 6.6 m3) with a vacuum-tight door at least at one end, an inner module that slides through said door, magnetic suspension units on top and bottom of the cylinder, rotors of linear electric motor-generator (LMG) mounted at the cylinder sides, etc., (US 5950543). The capsules are accelerated at departure point A and decelerated at destination point B by LMGs which have their stators mounted in the tube. The LMGs recuperate the energy of capsule motion at destination points and reuse it for return traveling of the capsules. A travel to point B of a capsule accelerated at point A in an evacuated tube is not principally associated with energy consumption.

Furthermore, traveling capsules transfer kinetic energy from departure to destination point. For instance, when a capsule carrying a load of 363 kg is accelerated and decelerated at points A and B respectively between speeds of 0 and 1300 km/h, a kinetic energy of the capsule load is moved from A to B. Since both acceleration and deceleration are provided by electric linear motors/generators, the corresponding amount of electrical energy (6.6 kWh) is moved as well. The main issue of this method is in relatively higher energy loss in electrical motors/generators reaching 10-15% per round trip.

Another restriction for transporting energy this way is that for a complete turnaround, a capsule has to return back to its origin with the same speed bringing back the same amount of energy, unless it moves back at different mass and/ or speed. The latter contradicts with ET3 traffic protocol stating that all capsules have to move with the same speed. Transported this way, electrical energy (per kg of load) for speeds 1300 and 6500 km/h respectively is: 16 and 408 Wh/kg or 6.6 and 166 kWh respectively. Assuming e.g., a different mass of capsule on the way forth and back, the energy required to accelerate capsule load (363 kg) to 1300 km/h is 6.6 kWh and the loss(of ac-decelerating the whole capsule) is 1-1.5 kWh, therefore the round trip energy loss at this speed is: 15-23%. Furthermore, the capsule kinetic energy and the losses in LMGs grow up in proportion to the capsule velocity squared.

The idea of transportation of passengers and cargo in vacuum tubes in order to reduce or even eliminate air drag and save energy is known since early 19th century. In late 1990th-early 2000th it was complemented by the ideas of capsule suspension based on magnetic levitation principles, and linear motors-generators as vehicle acceleration/deceleration means. A combination of said ideas, along with introduction of cylindrical passenger/cargo capsules having at least one opened end, slidable passenger/cargo inner modules, airlocks and terminal stations for servicing such capsules led to ET3 system concept (US 5950543). At the moment ET3 presents the most advanced (but not exclusive) vacuum tube transportation system of the future oriented towards transportation of passengers and suitable conventional cargoes.

However, the issues of cargo transport are not yet properly considered in ET3 project (US 5950543, www.et3.com, http://www.quantumtrain.com/et3/, http://et3.net/), as the passengers and cargoes are processed uniformly. There are no cargo traffic specific means and solutions in ET3 project. Instead, one can find in ET3 many specific passenger transport system limitations (linked e.g., to human body dimensions), which make ET3 less efficient for cargo transportation. Basic dimensions of ET3 capsules and tubes, acceleration and velocities of the capsules are set in ET3 for passenger comfort and convenience instead of efficiency of transportation of specific cargoes. For example, the capsule travel time, capsule dimensions and vacuum tight isolation characteristics of capsule hull are not as critical for cargo transport as they are for passengers. While many types of cargoes (first of all, small size - light weight- expensive ones, such as documents) can be transported in ET3 system the transport of many other cargoes, first of all of energy and natural resources, requires different transportation system models. In particular, for many types of cargo the transportation cost and efficiency are of importance, as the transport system has to compete with existing alternatives.

The processes of capsule loading/unloading in ET3 are comfortable for the passengers, but do not account for different requirements of transportation of cargoes, which are conveyed in large quantities, such as energy rich substances (energy carriers).

When in case of e.g. LNG, ET3 network and vehicles at 1300 km/h are used for energy transport, the capital costs are 15 M€/km (resulting in the investment of 90 B€ for 6000 km long and N-2 redundant connection) and at the maximum available capacity (95500 capsules/hour), within a period of 3 years capsules will make a total of less than 2.5 billion trips, thus each capsule has to earn at least 72 € per trip (assuming 50% of the income is used for the return), or 18-36 € per passenger per trip (ET3 capsule transports 2-4 passengers on average) in order to return in 3 years the investment. However, the competitive cost of shipping to Europe amounts 122 €/ton of LNG (see method 2), or 35 € per ET3 capsule trip (transporting 0.29 ton of LNG). Therefore, it is likely that in the best case ET3 system operated exclusively for transporting energy (and thus delivering 207 instead of 45 GWe) will have the investment returned in at least 6 years, which makes this method economically unattractive as compared to methods 1-3 (three times higher capital cost, longer return). Also for ET3 system itself such energy transport is not the most attractive business, e.g., transport of passengers is twice as profitable.

Accordingly, it is an object of the invention to provide an evacuated tube vehicle for transporting cargo, in which the above-mentioned disadvantages are reduced or even removed.

This object is achieved according to the invention with a vehicle, comprising first and second elements of magnetic suspension means to support the vehicle by levitation in evacuated tube which vehicle further comprises:
- open from at least two sides support frame for supporting cargo, such as at least one container;
- first and second sub-frames arranged on opposite ends to the open support frame;
- wherein first and second magnetic suspension means are attached to the support frame and/or the sub-frames; and
- wherein a cargo space is defined by at least the support frame and the first and second sub-frames, such that the cargo space is open for insertion of cargo from at least one side of the vehicle.

With the invention a vehicle is provided for an evacuated tube, which is optimally designed for transporting cargo.

For cargo closed in isolating vacuum tight container, the lack of air in the ambient atmosphere, is typically no problem. As a result, the construction of the evacuated tube vehicle does not require providing of an airtight cargo space. So, the cargo space in open from at least two sides support frame for supporting cargo can be open from at least these two sides, which facilitates quick loading and unloading of cargo containers, as air-locks are not required.

With cargo space open for insertion of cargo from at least one side of the vehicle a cargo, such as for example containers with the same length as the cargo space can be slid sideways into the cargo space of the vehicle. This allows for a quick loading and unloading of the vehicles according to the invention.

With open access to the cargo space from both sides one container can be extracted from the cargo space and removed from one side, while the other can be simultaneously inserted in the cargo space from the opposite side of the vehicle.

This object could alternatively also be achieved according to the invention with an evacuated tube vehicle for transporting cargo, which vehicle comprises:
- an elongate support frame for supporting cargo, such as a container;
- first and second sub-frames arranged on opposite sides to the elongate support frame;
- first and second magnetic suspension means arranged to the support frame and/or the sub-frames to support the evacuated tube vehicle by levitation in an evacuated tube,
wherein a cargo space is defined by at least the elongate support frame and the first and second sub-frames, and wherein the cargo space is in direct contact with the ambient atmosphere, such that the cargo space is open for insertion of cargo from at least one side of the vehicle.

The below disclosed embodiments also apply to this alternative main embodiment of the invention.

In a preferred embodiment of the evacuated tube vehicle according to the invention, the support frame comprises at least two load bearing beams arranged parallel to and above each other.

The beams provide rigidity to the vehicle and place for mounting of at least first and second elements of magnetic suspension means to support the vehicle by levitation in evacuated tube.

The elements of acceleration/deceleration means, playing the role of rotors of distributed linear motor generators (LMGs) can also be mounted on the load bearing beams or on first or second or on both first and second sub-frames.

At least a pair of diverge force elements are mounted on both sides of sub-frames of the vehicle close to the level of central axis of the tube in order to cooperate with at least a pair of tube based diverge force elements designed to steer the vehicle while at an interchange" (see US Patent Application Publication, Pub./No.: 2014/026 1054A1, from Sept.18, 2014).

While horizontal positioning of open support frame is also possible, the vertical frame with load bearing beams arranged parallel to and above each other is preferable for operation of magnetic suspension means, for steering the vehicle while at an interchanges and for vehicle loading/unloading.

In yet another embodiment of the evacuated tube vehicle according to the invention, the at least two load bearing beams are length adjustable to adjust the distance between the sub-frames and correspondingly adjust the length of the cargo space.

By having the load bearing beams adjustable in length, the length of the cargo space can be adjusted and can accordingly by adjusted to the cargo, which needs to be transported. For example, voluminous low weight cargo would require a larger cargo space, while a smaller cargo space would suffice for high weight cargo.

Furthermore, the sub-frames could be height and width adjustable to fit the diameter of the evacuated tube.

The vehicles travelling in evacuated tube can be long, up to the length of pieces of the tube, preferably 25 m, from which the tube pathway is built. However, the vehicles are limited in weight, e.g. up to 360-400 kg of cargo and 550 kg of fully loaded vehicle for compatibility with ET3, and in height and width to fit the evacuated tube. It should be noted, that extra weight of moving vehicle as well as that of large diameter tube produce extra load for evacuated tube supports, and hence increases the cost of the transport system.

With adjustable vehicle length, height and width a unique vehicle design can fit different diameter tubes used in different transport systems.

For example, the invention foresees a design of a long enough vehicle carrying two or even four small diameter cargo containers, preferably 0.6 m in diameter, filled with voluminous low weight cargo placed in the cargo space one after another along the vehicle length.

From another hand, the vehicle according to the invention can fit the requirements of ET3 transport system, which uses 1.3 m in diameter tubes. With open frame design the vehicle according to the invention can carry either one full weight container or two or even three small diameter cargo containers filled with voluminous low weight cargo and placed side by side in the cargo space of the vehicle. This feature can be important for complementary use of cargo vehicles according to the invention and mostly passenger oriented ET3 transport system. The invention further relates to a combination of an evacuated tube vehicle according to the invention and a cargo container, wherein the cargo container is arranged in the cargo space of the evacuated tube vehicle, wherein the cargo container comprises a vacuum-tight housing enveloping a storage space for storing cargo.

In a preferred embodiment of the combination according to the invention the housing is provided with insulation for insulating the storage space within a cargo container from the ambient atmosphere thus preventing the pollution of the atmosphere in the tube with the emanations from the cargo and the influence of residual gases from the tube on the cargo.

The invention foresees that the transportation of cargo in insulated cargo containers will appear to be a preferable way of transport of cargo in evacuated tube systems.

An evacuated tube system can typically run over land and the sun will heat the inside of the tubes easily. When cargo is transported with the vehicle according to the invention, the cargo could easily heat up, due to the direct contact with the ambient atmosphere. By providing the housing of the cargo container with thermal insulation, the cargo arranged in the storage space can be insulated from the heat of the ambient atmosphere.

In a preferred embodiment of the combination according to the invention, the storage space of the cargo container is filled with an energy rich substance, such as a fuel or another chemical substance, or thermal energy accumulating substance.

By filling the cargo container with an energy rich substance, the evacuated tube system can be used for transporting energy at relative low costs, as explained above.

In yet another embodiment of the combination according to the invention, the housing is provided with a vacuum-tight fill opening for filling the storage space of the container with the energy rich substance.

Using a vacuum-tight fill opening, the storage space can easily be filled and drained with the energy-rich substance, such as for example gasoline, while during transportation the contained substance will not pollute te atmosphere of evacuated tube.

In a further preferred embodiment of the combination according to the invention, at least one electrical battery is mounted in the storage space of an isolated cargo container and wherein the container housing comprises contact means electrically connected to the at least one electrical battery for charging and discharging said battery.

A further preferred embodiment of the combination according to the invention comprises an evacuated loading station, which evacuated loading station is connected to an evacuated tube system, wherein the evacuated loading station is provided with loading means for loading and unloading the container in and out of the evacuated tube vehicle.

By providing an evacuated loading station the containers can be loaded and unloaded in the low air ambient atmosphere of the evacuated tubes, such that the vehicles can quickly continue their travel with newly loaded containers.

The off-loaded containers and containers to be loaded, can then be transferred at a different pace to the outside of the evacuated tube system.

It should be also noted that with fast delivery, e.g. about one hour delivery time for 600 km distance, facilitated by the combination according to the invention there is no need for storing of large amounts of hazardous energy rich substances, as well as other hazardous chemicals, nearby the areas of their consumption. Necessary amounts of such substances can be stored ready for transportation, i.e. packed in cargo containers preferably in evacuated storages placed at or nearby the loading station, wherein the loading station is positioned within the reach of the vehicle. The amounts of stored substances and the distance to the loading station can be calculated based on evacuated tube transport capacity and required consumption.

Yet another embodiment of the combination according to the invention comprises further a cargo container filling station, which is connected to the evacuated loading station, wherein the cargo container filing station is provided with output means for outputting filled containers into the evacuated loading station.

With cargo containers filled with energy rich substance the invention relates to a method of energy transport between a originating terminal and a destination terminal using the combination according to the invention, which method comprises the steps of:
- filling or charging of the cargo container with energy rich substance or electrical energy respectively at the originating terminal;
- moving the cargo container to the evacuated loading station;
- loading the cargo container in the cargo space of evacuated tube vehicle at evacuated loading station;
- transporting the evacuated tube vehicle with cargo container in the evacuated tube to the destination terminal;
- unloading the cargo container from evacuated tube vehicle at the evacuated loading station of the destination terminal.

The method according to the invention can be compared to conventional oil/gas pipe transport. Oil and gas continuously move in a pipe at about 10-15 km/h velocity, with pipe capacity of 1.5 m3/s (830 000 barrels/day) as for Keystone Xl Pipeline, for example. The same energy rich substances at the same capacity can move in proposed vehicles at 600 km/h when separated from each other by intervals of 88 m in frictionless evacuated tube. And when intervals between the vehicles moving at 600 km/h are decreased to 25 m, the capacity can be increased to 5.3 m3/s (2,898,692 barrels/day without a need to build 3-4 additional pipelines. Furthermore, the evacuated tube capacity can be increased even more with increasing the vehicle velocity (e.g., to 1300 km/h) or further decreasing the intervals between the vehicles (the latter option requires stronger and more expensive supports and more accurate control, both requiring less of additional investment).

In general, friction of moving oil/gas produce a force applied to the pipe and hence to the pipe supports. Therefore, oil/gas pipes require on- or under- the ground pipelines or strong pipe supports when elevated above the ground. Frictionless evacuated tubes are basically designed for elevated application setting therefore fewer requirements to the usage of land related to tube pathways.

These and other features of the invention will be elucidated in conjunction with the accompanying drawing.
Figure 1 shows schematically an embodiment 1 of the combination according to the invention.
Figure 2 shows a schematic view of a flow diagram of the proposed energy transport method according to the invention.

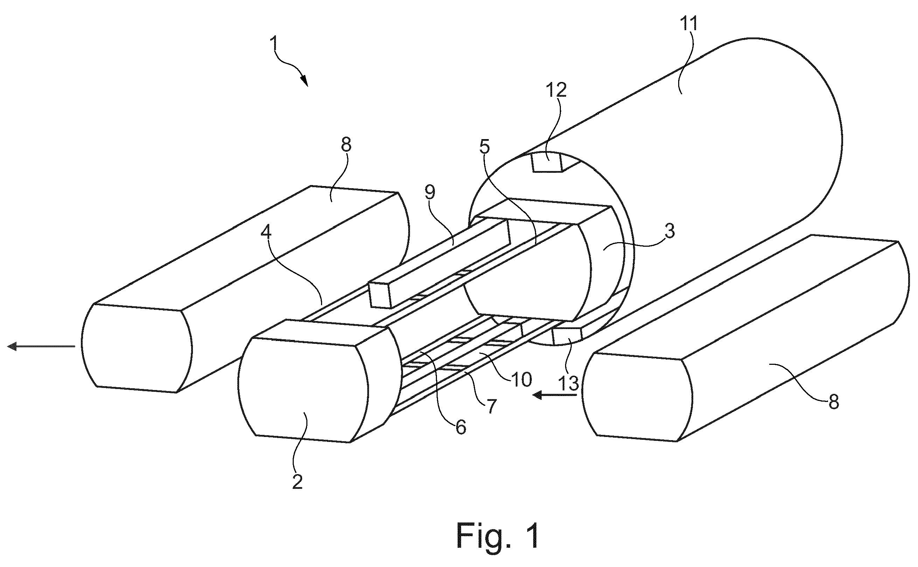

In figure 1, the combination 1 has a vehicle comprising two sub-frames 2, 3, which are connected by upper load bearing beams 4, 5 and lower load bearing beams 6, 7. These load bearing beams 4, 5, 6, 7 provide a support frame for supporting a container 8 in the cargo space enveloped by the two sub-frames 2, 3 and the load bearing beams 4, 5, 6, 7.

The support frame also supports elements of levitation force means of suspension, which are depicted as an elongate box-like element 9, 10.

The means 9, 10 allow for the vehicle to be suspended inside the tube 11 due to the interaction with rail 12, 13 with for example permanent magnets.

A pair of the elements of acceleration/deceleration means 14, 15, playing the role of rotors of linear motor generators (LMGs) are mounted on the upper load bearing beams 4, 5.

A pair of diverge force elements 16, 17 are mounted on both sides of sub-frames of the vehicle close to the level of central axis of the tube in order to cooperate with at least a pair of tube based diverge force elements designed to steer the vehicle while at an interchange" (US Patent Application Publication, Pub./No.: 2014/026 1054A1, from Sept.18, 2014).The vehicle has an open from either side of the vehicle structure defined by the beams 4, 6, 5 and 7 and the sub-frames 2 and 3. This open structure allows containers 8 to be loaded to and unloaded from the vehicle side-ways. This provides for a considerable shortening of loading and unloading time in comparison with known evacuated tube vehicles, such as the capsules of ET3 system.

The processes of loading/unloading present a bottleneck for any transport system with fast moving lightweight vehicles as the vehicles must depart and arrive in very short time intervals in order to form notable throughput capacity. The invention resolves the issue with evacuated tube vehicle and related method of energy transport.

For example, when loading/unloading 1.3 m-tall vehicles fitting in a 1.5 m in diameter tubular system the payload container has to be displaced to at least 1.5 m distance, if mounted/dismounted from vehicle sides. The time required for this operation (a time for the displacement with acceleration and deceleration of 9.8 m/s2) is about 0.78 s.

Sliding a 4 m long passenger/cargo inner module in or out of 5 m-long cylindrical hull of a known ET3 capsule at 9.8 m/s2 will require about 1.54 s (all dimensions are taken from ET3 project: US 5950543, www.et3.com). It should be noted that getting access to at least one open end of ET3 capsule for loading or unloading (or getting access to both ends of the capsule for simultaneous loading and unloading) will also require time (a full cycle of opening and closing ET3 capsule door lasts about 60 seconds) and effort.

The evacuated tube vehicle according to the invention can be loaded/unloaded faster than a known ET3 capsule due to it's open structure. This difference is important as the vehicles can depart and arrive to loading/unloading terminal post every 0.15 s at full throughput capacity for the tube operating at 600 km/h vehicle velocity. Servicing of capsule/vehicle in a fraction of a second is possible only with many capsules/vehicles are serviced simultaneously at many terminal posts. The number of required posts is set by the ratio of the time necessary for vehicle servicing to the vehicle departure/arrival time interval. With a plurality of cargo containers ready for transportation the vehicle servicing time can be as short as the time for the vehicle loading/unloading.

With the advantage of at least twice shorter vehicle loading/unloading time a transportation system with evacuated tube vehicles according to the invention require 50% less of terminal posts as compared to the conventional ET3 system when operating at full transportation system capacity. ET3 system treats passengers and cargo uniformly, and said passenger/cargo module can be received in evacuated tube only through the airlock, either within a capsule or being inserted in the capsule through the airlock. Known ET3 capsules individually pass the airlocks, and the time for servicing (loading/unloading, recharging, etc.) of each capsule is about 60s. Therefore, in order to operate at full tube capacity the ET3 system requires much more than twice the number of simultaneously operating terminal posts, compared to the proposed system.

Unlike ET3 restricted with the requirements of passenger comfort the system with evacuated tube vehicles according to the invention can be adapted to different tube diameters. It should be noted that specific density of existing liquid or slurry energy carriers (except of liquid hydrogen LH2) vary from 400 kg/m3 for LNG (mostly methane) to about 20 000 kg/m3 for slurry of uranium in liquid. That is, with e.g., 360 kg limitation on the weight of the vehicle cargo most of existing energy rich substances require cargo containers with less than one cubic meter volume. Such containers are not optimal for ET3 capsules 1.3 m diameter and 8 m3 volume.

Reduction of evacuated tube diameter decreases the capital cost of evacuated tube system. Hence, the proposed vehicle with smaller diameter (e.g. 0.6 m) moving in smaller diameter evacuated tube (e.g. 0.75 m) is cheaper for transportation of most of existing energy carriers (as well as many other cargoes) than typical known ET3 5 m-long capsule with 1.3 m diameter moving in a 1.5 m diameter tube. When e.g.: LNG, evacuated network of tubes 0.75 m in diameter and the vehicles at 1300 km/h are used in the proposed method of energy transport, the capital costs are under 7.5 M€/km (resulting in the investment of 45 B€ for 6000 km long and N-2 redundant connection) and at the maximum available capacity (95500 capsules/hour), within a period of 3 years capsules will make a total of less than 2.5 billion trips, thus each capsule has to earn at least 36 € per trip (assuming 50% of the income is used for the return) in order to return the investment in 3 years. The competitive cost of shipping to Europe amounts 122 €/ton of LNG (see method 2), or 36 € per ET3 capsule trip (transporting 0.3 ton of LNG). Therefore, it is likely that in the best case evacuated tube system operated exclusively for transporting energy (and thus delivering 207 instead of 45 GWe) will have the investment returned in 3 years, which makes this method economically more attractive as compared to methods 1-3 and to energy transport by ET3. Notably, 45 GWe can be delivered at the load factor of 0.22, therefore the proposed method has advantage in flexibility as compared to methods 1-3 (allowing to increase capacity of the energy flow 4 times without additional investment). Where applicable, excessive capacity of the system in proposed method can be balanced by transporting other cargo.

Therefore, in the above example the preferred cargo container for transportation of energy with evacuated tube vehicles according to the invention can be e.g., 4 m long and about 0.5 m in diameter and in this case it has a volume of about 0.8 m3. In turn, said container can contain two or more containers of smaller size or shape (e.g., of smaller length: 2, 3, 4, etc. smaller containers, each 2, 1.3, 1, etc. m-long, smaller diameter, shape or any combination thereof).

On the other hand, when it is justified (e.g., by the need of higher capacity even at increased cost) the proposed evacuated tube can have larger diameter than that of 1.5 m for ET3.

Naturally, all other combinations of container and vehicle length, diameter and shape are included. Preferable shape of said main container is a horizontally oriented cylinder (or any approximation to that) with two slightly flattened top and bottom sidewalls for effortless and efficient insertion into said cargo space in the support frame of the vehicle.

There are many heat sources on the way: walls of evacuated tubes irradiate heat absorbed from environment; residual gases in the tube produce friction, etc. Heated energy rich substances enclosed in payload containers and possible contamination on container walls produce vapors, which worsen the quality of evacuated space in the tubes and require extra pumping. Vacuum-tight jacket wrapping at least part of said payload container and isolating the atmosphere related to said payload and the payload itself from exchange of heat and payload related atmosphere with surrounding evacuated space can improve the situation and resolve the issue. Taking into account that the transportation is carried out mostly in vacuum environment, the jacket can contain non-exclusively several layers of thermal insulation.

A swapping unit with at least two robotic arms capable to operate in vacuum is preferred to operate as a loading means at evacuated loading station. The unit can remove cargo container mounted in the open frame of the vehicle by means of at least one robotic arm and simultaneously load another cargo container with the other arm. Naturally, all other variants of vehicle loading/unloading means capable to operate in evacuated space are included.

With the evacuated tube vehicle according to the invention a method of uniform processing of passengers and cargo adapted in ET3 can be further optimized in a dedicated cargo transportation system.

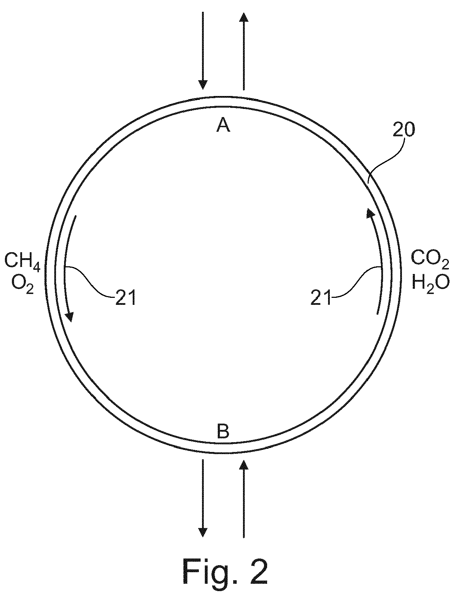

Figure 2 shows an schematic example of a flow diagram of the proposed energy transport method according to the invention wherein high energy density substances (here hydrocarbon, namely LNG: CH4 and liquid 02) flow in one direction: from A to B through the network of evacuated tubes 20 indicated by the arrows 21. The process is optimised for environmental benefits: e.g., delivered (from A to B) liquid CH4 and 02 are further converted into electricity and useful heat that are e.g., consumed (together with the delivered cold), while the combustion products (low energy substances: CO2, H2O, waste heat, etc.) are captured (e.g., using part of the delivered cold to liquefy CO2) and at least some of them are returned to the energy source (in this case: from B to A) for synthesis of the high energy density substances. Similarly, full electrical energy containers are moved from A to B, while empty ones are returned from B to A for refill (not shown in the figure).

## Claims

1. Evacuated tube vehicle for transporting cargo, comprising first and second elements of magnetic suspension means to support the vehicle by levitation in evacuated tube which vehicle further comprises:
- an open from at least two sides support frame for supporting cargo, such as at least one container;
- first and second sub-frames arranged on opposite ends of the open support frame;
- wherein first and second magnetic suspension means are attached to the support frame and/or the sub-frames; and-wherein a cargo space is defined by at least the support frame and the first and second sub-frames, such that the cargo space is open for insertion of cargo from at least one side of the vehicle.

2. Evacuated tube vehicle according to claim 1, wherein the support frame comprises at least two load bearing beams arranged parallel to and above each other.

3. Evacuated tube vehicle according to claim 2, wherein the at least two load bearing beams are length adjustable to adjust the distance between the sub-frames and correspondingly adjust the length of the cargo space.

4. Evacuated tube vehicle according to any of the preceding claims, wherein sub-frames are height and width adjustable to fit the diameter of the evacuated tube.

5. Combination of an evacuated tube vehicle according to any of the preceding claims and a cargo container, wherein the cargo container is arranged in the cargo space of the evacuated tube vehicle, wherein the cargo container comprises a vacuum-tight housing enveloping a storage space for storing cargo.

6. Combination according to claim 5, wherein the housing is provided with insulation for insulating the storage space from the ambient atmosphere.

7. Combination according to claim 5 or 6, wherein the storage space of the storage container is filled with an energy rich substance, such as a fuel or another chemical substance.

8. Combination according to claim 7, wherein the housing is provided with a vacuum-tight fill opening for filling the storage space with the energy rich substance.

9. Combination according to claim 5 or 6, wherein at least one electrical battery is mounted in the storage space and wherein the housing comprises contact means electrically connected to the at least one electrical battery for charging and discharging said battery.

10. Combination according to any of the claims 5 - 9, further comprising an evacuated loading station, which evacuated loading station is connected to an evacuated tube system, wherein the evacuated loading station is provided with loading means for loading and unloading the container in and out of the evacuated tube vehicle.

11. Combination according to any of the claims 5 - 10, further comprising a cargo container filling station, which is connected to the evacuated loading station, wherein the cargo container filing station is provided with output means for outputting filled containers into the evacuated loading station.

12. A method of energy transport between a originating terminal and a destination terminal using the combination according to any of the claims 5 - 10,
which method comprises the steps of:
- filling or charging of the cargo container with energy rich substance or electrical energy respectively at the originating terminal;
- moving the cargo container to the evacuated loading station;
- loading the cargo container in the cargo space of evacuated tube vehicle at evacuated loading station;
- transporting the evacuated tube vehicle with cargo container in the evacuated tube to the destination terminal;
- unloading the cargo container from evacuated tube vehicle at the evacuated loading station of the destination terminal.
